(19) Europäisches Patentamt
European Patent Office
Office européen des brevets

(11) **EP 1 565 803 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(21) Anmeldenummer: **03775357.1**

(22) Anmeldetag: **14.11.2003**

(51) Int Cl.:
***G06F 1/12*** *(2006.01)*

(86) Internationale Anmeldenummer:
**PCT/EP2003/012747**

(87) Internationale Veröffentlichungsnummer:
**WO 2004/049140 (10.06.2004 Gazette 2004/24)**

(54) **TAKTSYNCHRONISATIONSSCHALTUNG**

CLOCK SYNCHRONIZATION CIRCUIT

CIRCUIT DE SYNCHRONISATION AVEC L'HORLOGE

(84) Benannte Vertragsstaaten:
**DE FR GB**

(30) Priorität: **28.11.2002 DE 10255685**

(43) Veröffentlichungstag der Anmeldung:
**24.08.2005 Patentblatt 2005/34**

(73) Patentinhaber: **Infineon Technologies AG**
**81669 München (DE)**

(72) Erfinder: **DI GREGORIO, Lorenzo**
**80797 München (DE)**

(74) Vertreter: **Charles, Glyndwr**
**Reinhard-Skuhra-Weise & Partner,**
**Patentanwälte,**
**Friedrichstrasse 31**
**80801 München (DE)**

(56) Entgegenhaltungen:
**EP-A- 1 113 353       WO-A- 01/79987**
**US-A- 5 638 015       US-B1- 6 327 207**

• **SEMERARO G ET AL: "Energy-efficient processor design using multiple clock domains with dynamic voltage and frequency scaling" PROCEEDINGS OF THE EIGHT INTERNATIONAL SYMPOSIUM ON HIGH-PERFORMANCE COMPUTER ARCHITECTURE, 2. Februar 2002 (2002-02-02), Seiten 24-35, XP010588708 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Taktsynchronisationsschaltung zur Synchronisation zweier Taktsignale für die Datenübergabe zwischen Funktionsblöcken unterschiedlicher Zeitdomänen.

In digitalen Schaltkreisen sind in vielen Fällen verschiedene Funktionsblöcke vorgesehen, die in unterschiedlichen Zeitdomänen arbeiten und miteinander Daten austauschen. Dabei werden die unterschiedlichen Funktionsblöcke durch Taktsignale mit unterschiedlichen Taktfrequenzen getaktet. Wenn die logischen Funktionsblöcke mit unterschiedlichen Taktsignalen als Zeitbezug versorgt werden, muss sichergestellt werden, dass Datensignale, die von einem Funktionsblock zu dem anderen Funktionsblock übertragen werden, nicht fehlinterpretiert werden.

Das Vorsehen verschiedener, unkorrelierter Zeitdomänen auf einem Chip kann unterschiedliche Gründe haben. Die Signalverteilung des Taktsignals über den gesamten Chip ist in vielen Applikationen nicht möglich, da die Taktfrequenz zu hoch ist. Die zufällige Phasendifferenz zwischen den verschiedenen Taktsignalen kann im Vergleich zu der Frequenz eine hohe Variabilität aufweisen. Eine weitere Möglichkeit besteht darin, dass das Taktsignal aus einem externen Datenstrom generiert wird.

Unter den völlig unkorrelierten Taktsignalen gibt es auch Fälle von korrelierten Taktsignalen mit variabler Korrelation. Variable Korrelation ist typisch für die dynamische Frequenzskalierung von Teilschaltungseinheiten. Verschiedene Möglichkeiten, die durch mehrere unterschiedliche Zeitdomänen eröffnet werden können, kann beispielsweise in G. Semeraro, G. Magklis, R. Balasubramonian, D. H. Albonesi, S. Dwarkadas und M. L. Scott, "Energy-Efficient Processor Design Using Multiple Clock Domains with Dynamic Voltage and Frequency Scaling", 8th International Symposium on High-Performance Computer Architecture, S. 29-40, Februar 2002, nachgelesen werden.

Die Datensignale, die zwischen Funktionsblöcken unterschiedlicher Zeitdomänen übertragen werden, können nicht durch herkömmliche Register abgetastet werden, da die Set-up-Zeit des Registers durch das empfangene Datensignal verletzt werden kann, wobei das Register in einen so genannten metastabilen Zustand versetzt wird. In diesem Falle ist die Phasendifferenz zwischen den zwei Zeitdomänen unbekannt. Der Grund hierfür kann entweder darin liegen, dass die Varianz des Signals zu groß ist oder die Ungenauigkeit des Ergebniswertes zu hoch ist. Ein metastabiles Register erzeugt einen unzulässigen Datenausgabewert, da die Ausgangsspannung in einem Mittenbereich zwischen der Versorgungsspannung und der Massespannung verbleibt. Dieser unzulässige Ausgabewert kann bei weiteren Gattern zu unzulässigen Datenwerten führen und somit zu einer Fehlfunktion von weiteren Einrichtungen auf dem gesamten Chip.

Es wurden daher besonders ausgestaltete Register, so genannte Synchronisierer, vorgeschlagen, die die Wahrscheinlichkeit des Auftretens eines metastabilen Zustandes verringern. Derartige Synchronisierer bestehen im Wesentlichen aus zwei kaskadisierten, flankengetriggerten Flip-Flops. Ein einstufiges Synchronisierregister weist in jedem Falle eine zu hohe mittlere Fehlerrate MTBF (meantime between failures) auf. Für viele Anwendungen ist ein Synchronisierregister mit zwei kaskadenförmig geschalteten, flankengetriggerten Flip-Flops einsetzbar, da die mittlere Fehlerzeit MTBF als ausreichend angesehen werden kann. Bei sehr hohen Taktfrequenzen sind u.U. zwei kaskadenförmig geschaltete, flankengetriggerte Flip-Flops zur Erzielung einer ausreichend hohen mittleren Fehlerzeit MTBF eingesetzt. Je mehr unabhängige Synchronisierregister vorgesehen sind, desto geringer ist die gemeinsame mittlere Fehlerzeit MTBF. Das Vorsehen derartiger Synchronisierregister ist eine ständige Quelle der Unsicherheit beim Schaltungsentwurf.

Zur Überwindung der Unsicherheiten bei der Datenübergabe zwischen Funktionsblöcken unterschiedlicher Zeitdomänen sind verschiedene technische Vorschläge unterbreitet worden, die man in zwei Hauptgruppen unterteilen kann, nämlich so genannte Handshake-Techniken oder Warteschlangen-Techniken.

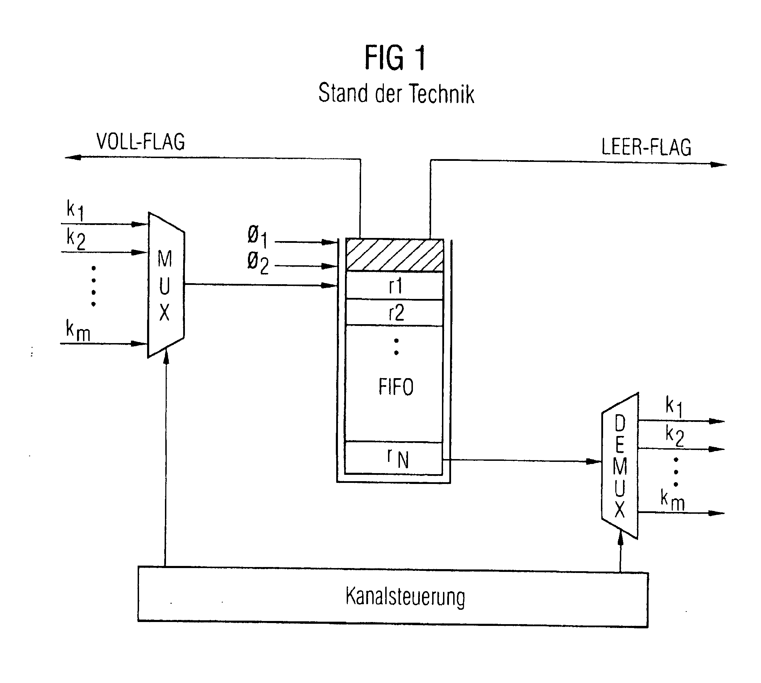

Fig. 1 zeigt ein Beispiel für eine Datenübergabe mittels Warteschlangen (queues). Bei dieser Schaltung wird ein FIFO-Register eingesetzt, um Daten zwischen Funktionsblöcken unterschiedlicher Zeitdomänen zu übergeben. Das FIFO-Register umfasst viele Speicherregister $R_i$. Das FIFO-Register wird durch ein erstes Taktsignal $\Phi_1$ und mit einem zweiten Taktsignal $\Phi_2$ getaktet. Die Daten werden mit der Taktfrequenz des ersten Taktsignals $\Phi_1$ in das FIFO-Register eingeschrieben und mit der Taktfrequenz des zweiten Taktsignals $\Phi_2$ aus dem FIFO-Register ausgelesen. Die eingeschriebenen Daten stammen bei dem dargestellten Beispiel von verschiedenen Datenkanälen $K_i$, die durch eine Kanalsteuerung mittels eines Multiplexers ausgewählt werden. Die Kanalsteuerung steuert ferner einen Demultiplexer an der Ausgabeseite des FIFO-Registers zur weiteren Datenübertragung über verschiedene Datenkanäle $K_i$ an. Ein Voll-Anzeigeflag zeigt einem Funktionsblock in der ersten Zeitdomäne an, dass das FIFO-Register voll ist, und ein Leer-Anzeigeflag zeigt einem Funktionsblock in der zweiten Zeitdomäne an, dass das FIFO-Register leer ist.

Sollen Daten von dem Datenkanal $K_i$ in der ersten Zeitdomäne jedem Datenkanal $K_i$ in der zweiten Zeitdomäne übertragen werden, kann es zu einem so genannten Head-of-line-Blocking kommen. Dabei wird die Warteschlange durch einen Kanal blockiert, wenn der entsprechende Ausgabekanal nicht bereit ist.

Ein weiterer Ansatz zur Lösung des Synchronisationsproblems zwischen Funktionsblöcken unterschiedlicher Zeitdomänen besteht in einer Handshake-Implementierung. Ein Beispiel für eine derartige Handshake-Implementierung ist in der US-5,291,529 beschrieben.

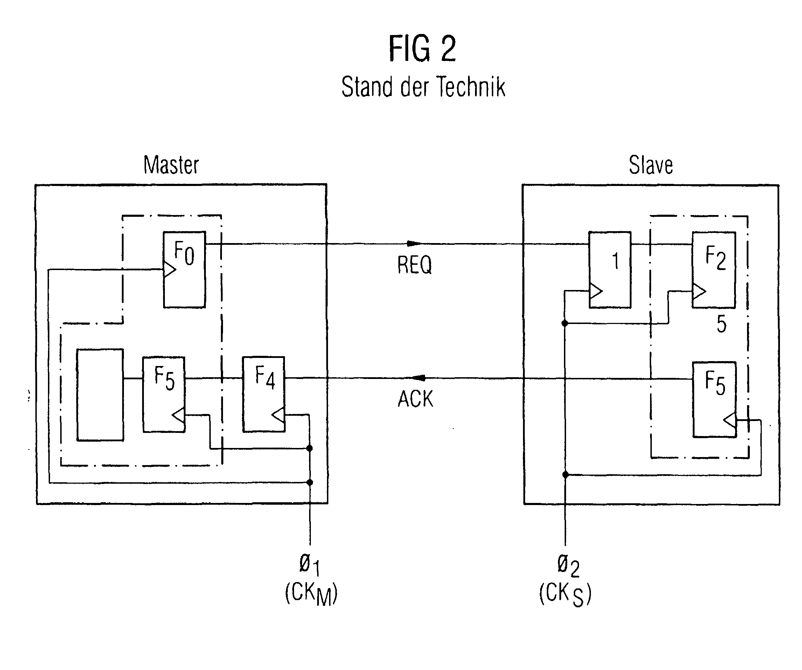

Fig. 2 zeigt das Prinzip einer Handshake-Implementierung zwischen zwei Funktionsblöcken mit synchroner Logik, die in unterschiedlichen Zeitdomänen arbeiten. Der so genannte Master wird mit einem ersten Taktsignal $\Phi_1$ getaktet, und eine Slave-Einheit wird mit einem zweiten Taktsignal $\Phi_2$ getaktet. Die Taktfrequenzen der beiden Taktsignale sind dabei unterschiedlich. Zur Datenübertragung sendet die Master-Schaltungseinheit ein Anforderungssignal (request) an die Slave-Einheit. Die Slave-Einheit erfasst das Anforderungssignal (request) und führt die Anforderung durch. Danach zeigt die Slave-Einheit die Ausführung der Aufgabe bzw. Task der Master-Einheit an, indem sie ein Acknowledgement-Signal zurück an die Master-Einheit sendet. Da die Master-Einheit und die Slave-Einheit, wie in dem dargestellten Beispiel, keine gemeinsame Zeitbasis haben, d.h. sie durch Taktsignale mit unterschiedlichen Taktfrequenzen getaktet sind, ist es wesentlich, sicherzustellen, dass die Datensignale, die zwischen der Master-Einheit und der Slave-Einheit ausgetauscht werden, aufgrund metastabiler Zustände nicht fehlinterpretiert werden.

Besonders die Übergabe von Daten aus einem Funktionsblock, der mit einer hohen Taktfrequenz getaktet wird, zu einem Funktionsblock, der mit einer niedrigeren Taktfrequenz getaktet wird, ist kritisch und in schaltungstechnisch herkömmlicher Weise nur aufwändig realisierbar. Bei einer herkömmlichen Handshake-Implementierung besteht insbesondere das Problem, dass der Funktionsblock, der durch das langsame Taktsignal getaktet wird, zu spät auf eine Anforderung von einem Funktionsblock reagiert, der durch ein Taktsignal mit einer höheren Taktfrequenz getaktet wird.

Es ist daher die Aufgabe der vorliegenden Erfindung, eine Taktsynchronisationsschaltung mit geringem schaltungstechnischem Aufwand zu schaffen, die die zuverlässige Datenübergabe von Daten zwischen Funktionsblöcken, die in unterschiedlichen Zeitdomänen arbeiten, gewährleistet.

Diese Aufgabe wird erfindungsgemäß durch eine Taktsynchronisationsschaltung mit den im Patentanspruch 1 angegebenen Merkmalen gelöst.

Die Erfindung schafft eine Taktsynchronisationsschaltung zur Synchronisation eines ersten Taktsignals ($\Phi_1$) und eines zweiten Taktsignals ($\Phi_2$) für die Datenübergabe von einem ersten Funktionsblock, der durch das erste Taktsignal ($\Phi_1$) mit einer höheren Taktfrequenz ($f_{\Phi_1}$) getaktet wird, zu einem zweiten Funktionsblock, der durch das zweite Taktsignal ($\Phi_2$) mit einer niedrigeren Taktfrequenz ($f_{\Phi_2}$) getaktet wird,

wobei die Taktsynchronisationsschaltung aufweist:

eine Abtasteinheit zum Abtasten des zweiten Taktsignals ($\Phi_2$) durch das erste Taktsignal ($\Phi_1$) zum Erzeugen von Abtastwerten (S) und von Flankendetektionswerten (E) des abgetasteten zweiten Taktsignals ($\Phi_2$),
eine mit dem ersten Taktsignal ($\Phi_1$) getaktete Logikschaltung zur Ausgabe der erzeugten Abtastwerte (S) oder der Flankendetektionswerte (E) als rekonstruiertes zweites Taktsignal ($\Phi_2$') im Zeitraster des ersten Taktsignals ($\Phi_1$) an einem Ausgang der Logikschaltung,
wobei der Ausgang der Logikschaltung nach Ausgabe eines Wertes (S, E) zurückgesetzt wird, bis die Logikschaltung ein Freigabesignal empfängt,
wobei die Logikschaltung ein Edge-too-Early-Signal (ETE) generiert, wenn der erzeugte Flankendetektionswert (E) vor dem Empfang des Freigabesignals logisch hoch ist, und
ein Edge-too-Late-Signal (ETL) generiert, wenn das Freigabesignal empfangen wird, bevor der erzeugte Flankendetektionswert (E) logisch hoch ist,
und eine mit dem ersten Taktsignal ($\Phi_1$) getaktete Signalverzögerungsschaltung, die das rekonstruierte zweite Taktsignal ($\Phi_2$') mit einer variablen Zeitverzögerung ($\tau$) in Abhängigkeit von dem Edge-too-Early-Signal (ETE) und dem Edge-too-Late-Signal (ETL) verzögert.

Bei einer bevorzugten Ausführungsform aktiviert das rekonstruierte zweite Taktsignal ($\Phi_2$') ein durch ein erstes Taktsignal ($\Phi_1$) getaktetes erstes flankengetriggertes Flip-Flop eines Datenübergabe-Zwischenspeichers zum Zwischenspeichern von Daten, die von dem ersten Funktionsblock ausgegeben werden.

Bei einer bevorzugten Ausführungsform ist dem ersten flankengetriggerten Flip-Flop ein durch das zweite Taktsignal ($\Phi_2$) getaktetes zweites flankengetriggertes Flip-Flop des Datenübergabe-Zwischenspeichers nachgeschaltet, das die zwischengespeicherten Daten an dem zweiten Funktionsblock abgibt.

Die Logikschaltung der erfindungsgemäßen Taktsynchronisationsschaltung gibt vorzugsweise in Abhängigkeit von einem Betriebsmodussteuersignal entweder die Abtastwerte (S) oder die Flankendetektionswerte (E) als rekonstruiertes zweites Taktsignal ($\Phi_2$') ab.

Die Signalverzögerungsschaltung verzögert das rekonstruierte zweite Taktsignal ($\Phi_2$') vorzugsweise mit einer Zeitverzögerung ($\tau$), die ein Vielfaches (N) des Taktzyklus (T1) des ersten Taktsignals ($\Phi_1$) ist, wobei der Vervielfältigungsfaktor (N) eine Zeitverzögerungs-Transferfunktion des Edge-too-Early-Signals (ETE) und des Edge-too-Late-Signals (ETL) ist.

Dabei ist die Zeitverzögerungs-Transferfunktion vorzugsweise in einer Transferfunktionslogik der Signalverzögerungsschaltung gespeichert.

Die Transferfunktionslogik steuert vorzugsweise einen Multiplexer zum Durchschalten eines der Ausgänge einer Kette von Verzögerungsgliedern als Freigabesignal an die Logikschaltung an.

Dabei werden die Verzögerungsglieder vorzugsweise durch das erste Taktsignal ($\Phi_1$) getaktet.

Die Transferfunktionslogik der Signalverzögerungsschaltung ist bei einer bevorzugten Ausführungsform der erfindungsgemäßen Taktsynchronisationsschaltung programmierbar.

Die Abtasteinheit der erfindungsgemäßen Taktsynchronisationsschaltung enthält vorzugsweise

ein aus zwei in Reihe geschalteten flankengetriggerten Flip-Flops bestehendes erstes Register zum Abtasten des zweiten Taktsignals ($\Phi_2$) mit der steigenden Signalflanke des ersten Taktsignals ($\Phi_1$) und

ein aus zwei in Reihe geschalteten, flankengetriggerten Flip-Flops bestehendes zweites Register zum Abtasten des zweiten Taktsignals ($\Phi_2$) mit der fallenden Signalflanke des ersten Taktsignals ($\Phi_1$),

wobei das erste Register und das zweite Register parallel für den Empfang des zweiten Taktsignals ($\Phi_2$) von dem zweiten Funktionsblock verschaltet sind, und

einen durch das erste Taktsignal ($\Phi_1$) getakteten Signalflankendetektor, der in Abhängigkeit von dem abgegebenen Abtastwert des ersten Registers und dem abgegebenen Abtastwert des zweiten Registers und von dem im vorherigen Taktzyklus ausgegebenen Abtastwert einen Flankendetektionswert an die Logikschaltung abgibt.

In einer bevorzugten Ausführungsform der erfindungsgemäßen Taktsynchronisationsschaltung wird das re-konstruierte zweite Taktsignal ($\Phi_2$') als Anzeigesignal an dem zweiten Funktionsblock abgegeben, wobei das Anzeigesignal anzeigt, dass in dem Datenübergabe-Zwischenspeicher Daten zum Auslesen durch den zweiten Funktionsblock zwischengespeichert sind.

Des Weiteren werden bevorzugte Ausführungsformen der erfindungsgemäßen Taktsynchronisationsschaltung unter Bezugnahme auf die beigefügten Figuren zur Erläuterung erfindungswesentlicher Merkmale beschrieben.

Es zeigen:

Fig. 1 eine Datenübergabeschnittstelle mit Warteschlangen nach dem Stand der Technik;

Fig. 2 den prinzipiellen Aufbau einer Handshake-Implementierung nach dem Stand der Technik;

Fig. 3 ein Blockschaltbild der erfindungsgemäßen Taktsynchronisationsschaltung;

Fig. 4 den schaltungstechnischen Aufbau einer bevorzugten Ausführungsform der erfindungsgemäßen Taktsynchronisationsschaltung;

Fig. 5 Zeitablaufdiagramme zur Erläuterung der Funktionsweise der erfindungsgemäßen Taktsynchronisationsschaltung;

Fig. 6a eine bevorzugte Ausführungsform der in der erfindungsgemäßen Taktsynchronisationsschaltung enthaltenen Abtasteinheit;

Fig. 6b eine Wahrheitstabelle eines in der Abtasteinheit enthaltenen Signalflankendetektors;

Fig. 7 eine bevorzugte Ausführungsform der in der erfindungsgemäßen Taktsynchronisationsschaltung enthaltenen Signalverzögerungsschaltung;

Fig. 8 eine besonders bevorzugte Ausführungsform der erfindungsgemäßen Taktsynchronisationsschaltung.

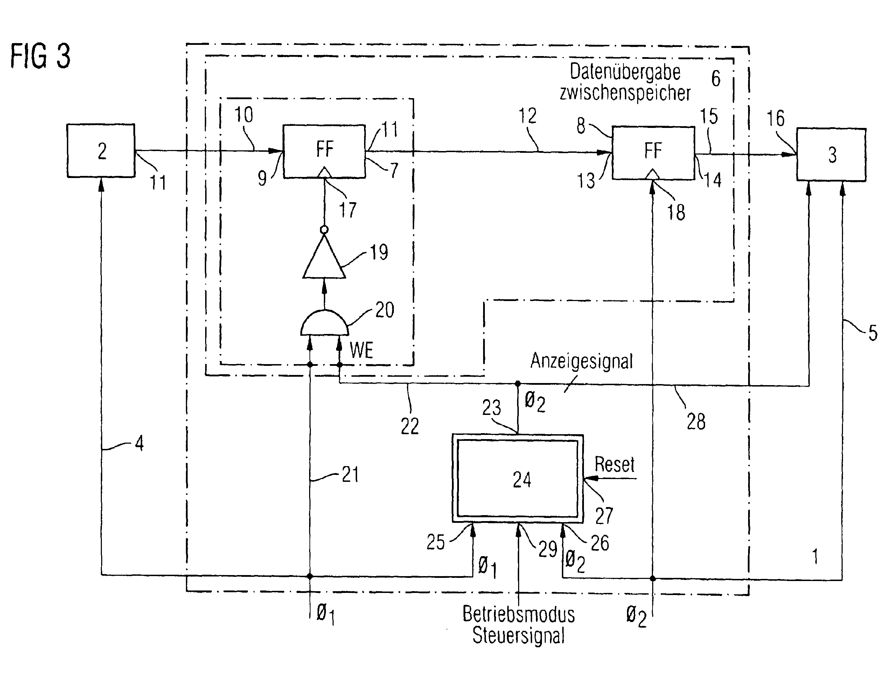

Wie man aus der Fig. 3 erkennen kann, ist eine Interfaceschaltung 1 zur Datenübergabe zwischen einem ersten Funktionsblock 2 und einem zweiten Funktionsblock 3 verschaltet. Die Interfaceschaltung 1 dient zur Datenübergabe zwischen den beiden Funktionsblöcken 2, 3, die in unterschiedlichen Zeitdomänen arbeiten. Die Funktionsblöcke 2, 3 sind beliebige, synchron arbeitende Datenverarbeitungsschaltungen, die jeweils mit einem Taktsignal getaktet werden. Die beiden Taktsignale $\Phi_1$, $\Phi_2$ sind unkorreliert bzw. weisen eine variable Korrelation auf. Der erste Funktionsblock 2 wird durch das erste Taktsignal $\Phi_1$ mit einer höheren Taktfrequenz $f_{\Phi_1}$ über eine Taktleitung 4 getaktet. Der zweite Funktionsblock 3 wird über eine Taktleitung 5 mit dem zweiten Taktsignal $\Phi_2$ versorgt. Das zweite Taktsignal $\Phi_2$ weist eine niedrigere Taktfrequenz $f_{\Phi_2}$ auf als das erste Taktsignal $\Phi_1$. Die Datenübergabe-Interfaceschaltung 1 gewährleistet die Datenübergabe von dem ersten Funktionsblock 2 zu dem zweiten Funktionsblock 3, ohne dass metastabile Datenzustände und somit Datenfehler auftreten. Die Datenübergabe-Interfaceschaltung 1 enthält einen Datenübergabespeicher 6, der zwei seriell verschaltete, flankengetriggerte Flip-Flops 7, 8 umfasst.

Der Dateneingang 9 des ersten flankengetriggerten Flip-Flops 7 ist über eine Datenleitung 10 mit einem Datenausgang 11 des ersten Funktionsblocks 2 verbunden. Das Flip-Flop 7 weist einen Datenausgang 11 auf, der über eine interne Datenleitung 12 des Datenübergabe-Zwischenspeichers 6 mit einem Dateneingang 13 des zweiten flankengetriggerten Flip-Flops 8 verbunden ist. Der zweite flankengetriggerte Flip-Flop 8 besitzt ebenfalls einen Datenausgang 14, der zwischengespeicherte Daten über eine Datenleitung 15 an einen Dateneingang 16 des zweiten Funktionsblocks 3 abgibt.

Die beiden in dem Datenübergabe-Zwischenspeicher 6 enthaltenen Flip-Flops 7, 8 weisen jeweils einen Takteingang 17, 18 auf. Der Takteingang 17 des ersten Flip-Flops 7 ist mit einem Inverterschaltkreis 19 verbunden, dessen Eingang mit dem Ausgang eines UND-Gatters 20 verbunden ist. Das UND-Gatter 20 verknüpft das über eine Leitung 21 zugeführte erste Taktsignal $\Phi_1$ mit einem Write-Enable-Signal WE, das über eine Leitung 22 von einem Signalausgang 23 der erfindungsgemäßen Taktsynchronisationsschaltung 24 abgegeben wird. Die Taktsynchronisationsschaltung 24 weist zwei Taktsignaleingänge 25, 26 auf. Der erste Taktsignaleingang 25 empfängt das erste Taktsignal $\Phi_1$, mit dem der erste Funktionsblock 2 (erste Zeitdomäne) getaktet wird. Der zweite Taktsignaleingang 26 der Taktsynchronisationsschaltung 24 wird mit dem zweiten Taktsignal $\Phi_2$ versorgt, das den zweiten Funktionsblock 3 taktet. Daneben weist die Taktsynchronisationsschaltung 24 eine Reset-Eingang 27 zum Empfangen eines Reset-Signals auf. Die Taktsynchronisationsschaltung 24 dient zur Synchronisation der beiden Taktsignale $\Phi_1$, $\Phi_2$. Dabei generiert die Taktsynchronisationsschaltung 24 ein rekonstruiertes zweites Taktsignal $\Phi_2'$ im Zeitraster des ersten Taktsignals $\Phi_1$ und gibt dieses über die Leitung 22 als Write-Enable-Signal WE an das erste Flip-Flop 7 innerhalb des Datenübergabe-Zwischenspeichers 6 ab. Das rekonstruierte zweite Taktsignal $\Phi_2$ wird ferner über eine Anzeigesignalleitung 28 an den zweiten Funktionsblock 3 abgegeben. Dieses Anzeigesignal zeigt dem Funktionsblock 3 an, dass in den Datenübergabe-Zwischenspeicher 6 Daten zum Auslesen bereitstehen.

Die Taktsynchronisationsschaltung 24 empfängt über einen weiteren Signaleingang 29 ein Betriebsmodussteuersignal zum Umschalten zwischen zwei Betriebsmodi.

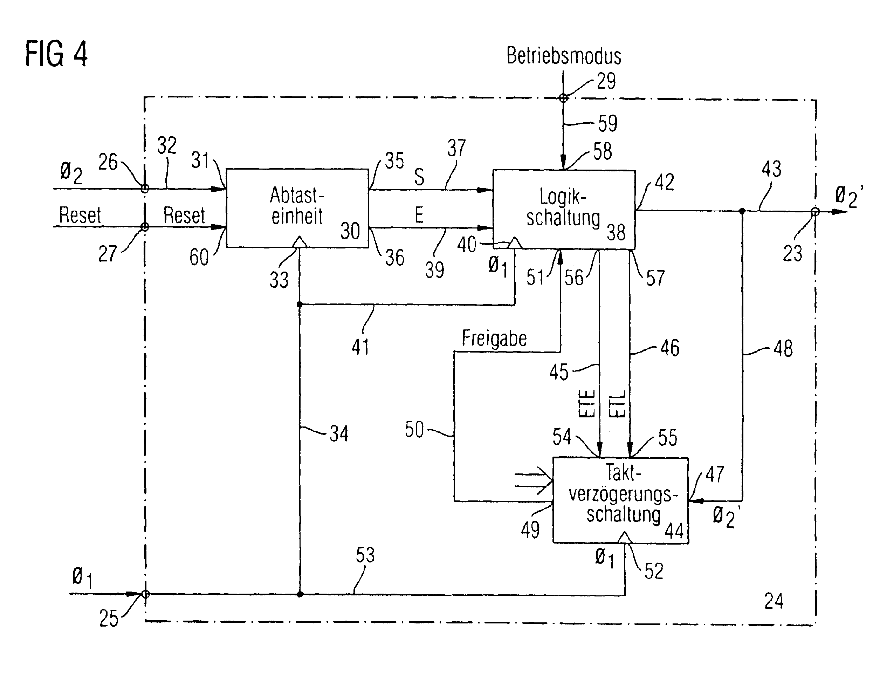

Fig. 4 zeigt den schaltungstechnischen Aufbau der erfindungsgemäßen Taktsynchronisationsschaltung 24, wie sie in Fig. 3 dargestellt ist.

Die Taktsynchronisationsschaltung 24 umfasst eine Abtasteinheit 30 zum Abtasten des zweiten Taktsignals $\Phi_2$ durch das erste Taktsignal $\Phi_1$, wobei die Abtasteinheit 30 Abtastwerte S und Flankendetektionswerte E des abgetasteten zweiten Taktsignals $\Phi_2$ generiert. Die Abtasteinheit empfängt über einen Signaleingang 31, der über eine Leitung 32 mit dem Eingang 26 verbunden ist, das zweite Taktsignal $\Phi_2$. Die Abtasteinheit 30 enthält einen Taktsignaleingang 33, der über eine interne Taktsignalleitung 34 das anliegende erste Taktsignal $\Phi_1$ empfängt. Die Abtasteinheit 30 besitzt zwei Ausgänge 35, 36. Über den ersten Ausgang 35 gibt sie die Abtastwerte S über eine Leitung 37 an einen nachgeschaltet Logikschaltung 38 ab. Die ermittelten Flankendetektionswerte E des abgetasteten zweiten Taktsignals $\Phi_2$ werden über eine Leitung 39 ebenfalls an die Logikschaltung 38 abgegeben. Die Logikschaltung 38 besitzt ihrerseits einen Taktsignaleingang 40, der über eine interne Taktleitung 41 das erste Taktsignal $\Phi_1$ zum Takten der Logikschaltung 38 empfängt.

Die Logikschaltung 38 weist einen Ausgang 42 auf, der über eine Leitung 43 mit dem Signalausgang 23 der Taktsynchronisationsschaltung 24 verbunden ist.

Die Logikschaltung 38 generiert ein so genanntes Edge-too-Early-Signal ETE, wenn der von der Abtasteinheit 30 abgegebene Flankendetektionswert E vor einem Freigabesignal einen logisch hohen Wert einnimmt. Anderenfalls generiert die Logikschaltung 38 ein Edge-too-Late-Signal ETL, wenn das Freigabesignal durch die Logikschaltung 38 empfangen wird, bevor der Flankendetektionswert E logisch hoch ist. Dabei stammt das Freigabesignal von einer Taktsignalverzögerungsschaltung 44 innerhalb der Taktsynchronisationsschaltung 24. Die Logikschaltung 38 gibt über eine Leitung 45 das Edge-too-Early-Signal ETE und über eine Leitung 46 das Edge-too-Late-Signal ETL an die Taktsignalverzögerungsschaltung 44 ab. Die Taktsignalverzögerungsschaltung 44 besitzt einen Signaleingang 47, der über eine Leitung 48 mit dem Ausgang 42 der Logikschaltung 38 verbunden ist. Die Taktsignalverzögerungsschaltung 44 weist einen Ausgang 49 auf, der über eine Leitung 50 das Freigabesignal an einen Eingang 51 der Logikschaltung 38 anlegt. Die Taktsignalverzögerungsschaltung 44 besitzt einen Taktsignaleingang 52, der über eine interne Taktleitung 53 das erste Taktsignal $\Phi_1$ empfängt. Die Taktverzögerungsschaltung 44 weist zudem zwei Eingänge 54, 55 zum Empfang des Edge-too-Early-Signals ETE und zum Empfang des Edge-too-Late-Signals ETL auf, die von der Logikschaltung 38 über die Ausgänge 56, 57 abgegeben werden.

Die Logikschaltung 38 enthält zudem einen Signaleingang 58 zum Empfang des Betriebsmodussteuersignals über eine Leitung 59.

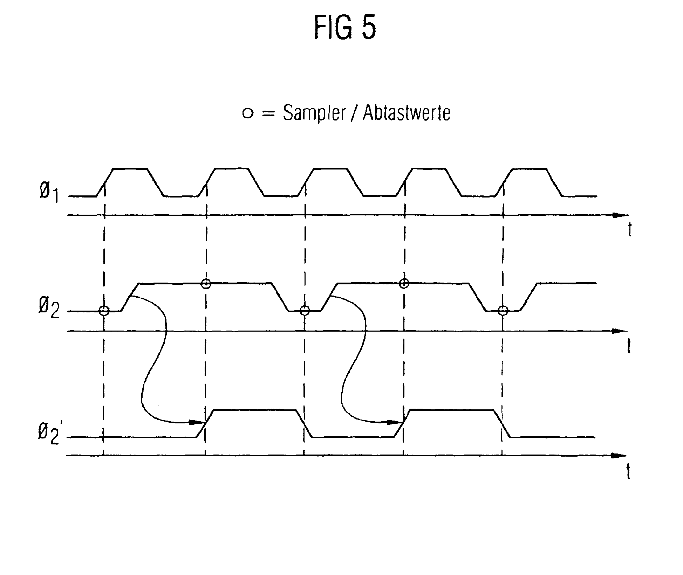

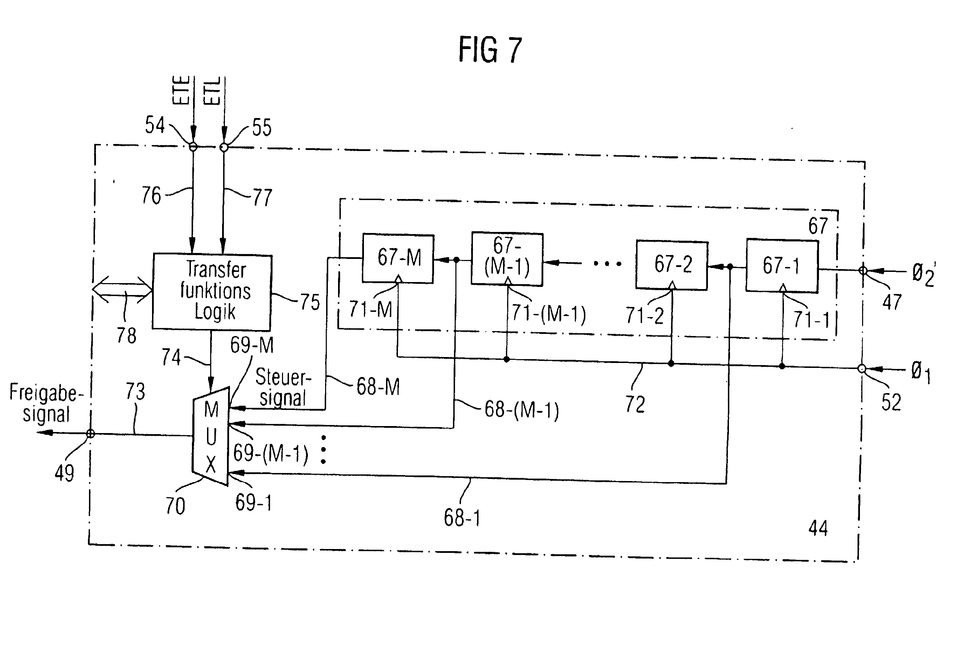

Die Fig. 5 zeigt ein Zeitablaufdiagramm der beiden an die Taktsynchronisationsschaltung 24 angelegten Taktsignale $\Phi_1$, $\Phi_2$ und des durch die Taktsynchronisationsschaltung 24 generierten, rekonstruierten zweiten Taktsignals $\Phi_2'$. Die Taktsynchronisationsschaltung 24 bildet die steigenden Signalflanken des zweiten niederfrequenten Taktsignals $\Phi_2$ im Zeitraster des ersten höherfrequenten Taktsignals $\Phi_1$ ab. Das ausgegebene rekonstruierte zweite Taktsignal $\Phi_2'$ wird dabei zurückgesetzt, um die nächste steigende Flanke des zweiten Taktsignals $\Phi_2$ erfassen zu können. Durch die erfindungsgemäße Taktsynchronisationsschaltung 24 wird das zweite Taktsignal $\Phi_2$ in dem Zeitraster des ersten Taktsignals $\Phi_1$ unter Verwendung einer Rückkopplungsschleife rekonstruiert. In der Rückkopplungsschleife befindet sich die Taktverzögerungsschaltung 44, die das an ihrem Signaleingang 47 angelegte Taktsignal $\Phi_2'$ um eine vorgegebene Anzahl von Taktzyklen des ersten Taktsignals $\Phi_1$ verzögert, um an dem Ausgang 49 zu dem Zeitpunkt abzugeben, wenn die nachfolgende Phase des langsameren zweiten Taktsignals $\Phi_2$ erwartet wird. Dabei wird die Zeitverzögerung durch die Taktverzögerungsschaltung 44 in Abhängigkeit von dem Edge-too-Early-Signal ETE und dem Edge-too-Late-Signal ETL eingestellt. Die beiden von der Logikschaltung 38 empfangenen Signale ETE und ETL enthalten die Information, ob die Zeitverzögerung, die durch die Taktverzögerungsschaltung 44 hervorgerufen wird, zu lange oder zu kurz ist. Der schaltungstechnische Aufbau der Taktsignalverzögerungsschaltung 44 wird in Zusammenhang mit Fig. 7 im Detail erläutert.

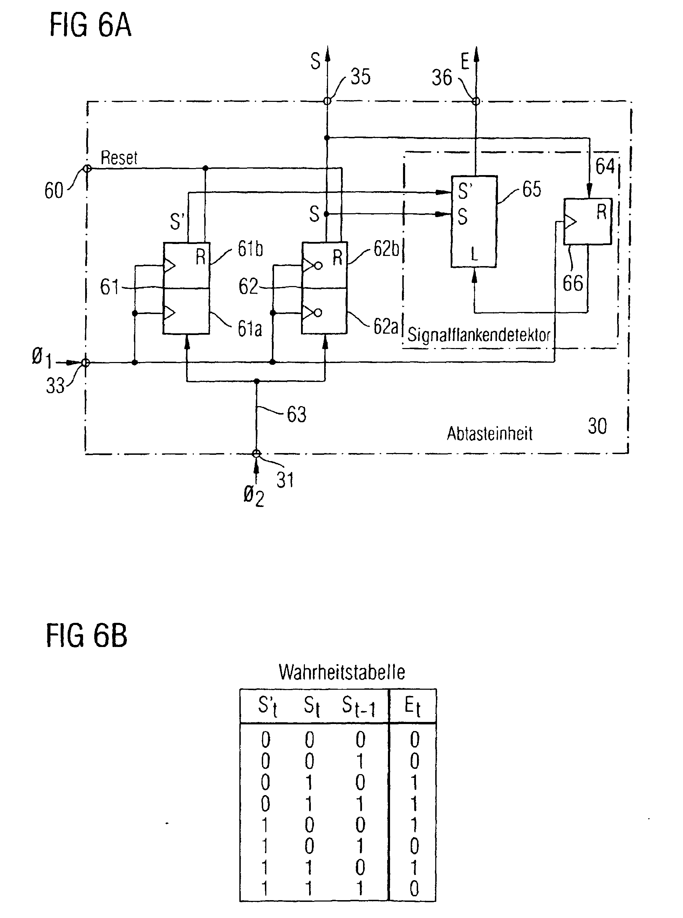

Fig. 6a zeigt eine bevorzugte Ausführungsform der in der erfindungsgemäßen Taktsynchronisationsschaltung 24 enthaltenen Abtasteinheit 30. Die Abtasteinheit 30 dient zum Abtasten des zweiten Taktsignals $\Phi_2$ durch das erste Taktsignal $\Phi_1$ zur Erzeugung von Abtastwerten S und von Flankendetektionswerten E des abgetasteten zweiten Taktsignals $\Phi_2$. Hierzu weist die Abtasteinheit 30 einen ersten Taktsignaleingang 33 für das erste Taktsignal und einen Taktsignaleingang 31 für das zweite langsamere Taktsignal $\Phi_2$. Darüber hinaus verfügt die Abtasteinheit über einen Reset-Eingang 60.

Die Abtasteinheit 30 enthält ein erstes Register 61 und ein zweites Register 62. Das erste Register 61 umfasst zwei in Reihe geschaltete, flankengetriggerte Flip-Flops 61a, 61b. Das zweite Register 62 umfasst zwei in Reihe geschaltete, flankengetriggerte Flip-Flops 62a, 62b. Das erste Register 61a dient zum Abtasten des zweiten Taktsignals $\Phi_2$ mit der steigenden Signalflanke des ersten Taktsignals $\Phi_1$. Das zweite Register 62 dient zum Abtasten des zweiten Taktsignals $\Phi_2$ mit der fallenden Signalflanke des ersten Taktsignals $\Phi_1$. Die beiden Register 61, 62 sind dabei für den Empfang des zweiten Taktsignals $\Phi_2$ über eine interne Leitung 63 der Abtasteinheit 30 parallel verschaltet. Die beiden Register 61, 62 können über den Reset-Eingang 60 zurückgesetzt werden.

Neben den beiden Abtastregistern 61, 62 enthält die Abtasteinheit 30 einen getakteten Signalflankendetektor 64. Der Signalflankendetektor 64 enthält eine Logik 65, deren Wahrheitstabelle in Fig. 6b dargestellt ist. Darüber hinaus enthält der Signalflankendetektor 64 ein Verzögerungsglied 66. Der von dem zweiten Register 62 abgegebene Abtastwert S (sample) wird über den Ausgang 35 der Abtasteinheit 30 an die Logikschaltung 38 abgegeben. Darüber hinaus wird der Abtastwert S dem Signalflankendetektor 64 zugeführt und durch das Verzögerungsglied 66 um einen Taktzyklus des ersten Taktsignals $\Phi_1$ verzögert. Das Verzögerungsglied 66 ist vorzugsweise ein flankengetriggertes Flip-Flop, das mit dem ersten Taktsignal $\Phi_1$ getaktet wird. Der Signalflankendetektor 64 gibt in Abhängigkeit von dem Abtastwert S des zweiten Registers 62 und dem Abtastwert S' des ersten Registers 61 sowie in Abhängigkeit von dem im vorherigen Taktzyklus an dem Ausgang 35 abgegebenen Abtastwert einen Flankendetektionswert E gemäß der in Fig. 6b dargestellten Wahrheitstabelle ab.

Fig. 7 zeigt eine bevorzugte Ausführungsform der Taktsignalverzögerungsschaltung 44. Die Taktsignalverzögerungsschaltung 44 verzögert das an dem Ausgang 23 anliegende rekonstruierte zweite Taktsignal $\Phi_2$' mit einer Zeitverzögerung $\tau$, die ein Vielfaches des Taktzyklus T1 des ersten Taktsignals $\Phi_1$ ist. Der Vervielfältigungsfaktor N wird dabei in Abhängigkeit von dem Edge-too-Early-Signal ETE und dem Edge-too-Late-Signal ETL eingestellt.

Die Signalverzögerungsschaltung 44 umfasst eine Kette von M Verzögerungsgliedern 67-i, deren Ausgänge jeweils über Leitungen 68 mit Eingängen 69 eines Multiplexers 70 verbunden sind. Die Verzögerungsglieder 67 der Kette weisen jeweils Takteingänge 71 zum Anlegen des ersten Taktsignals $\Phi_1$ über eine interne Taktleitung 72 auf. Die Signalverzögerungsschaltung 44 gibt über ihren Ausgang 49 ein Freigabesignal an die Logikschaltung 38 ab. Der Ausgang 49 der Signalverzögerungsschaltung 44 ist über eine interne Leitung 73 an den Ausgang des Multiplexers 70 angeschlossen. Der Multiplexer 70 schaltet in Abhängigkeit von einem Steuersignal, das er über eine Steuerleitung 74 empfängt, einen seiner Eingänge 69i an den Freigabe-Signalausgang 49 durch. Das Steuersignal empfängt der Multiplexer 70 über die Steuersignalleitung 74 von einer in der Signalverzögerungsschaltung 44 enthaltenen Transferfunktionslogik 75. Die Transferfunktionslogik 75 erhält über Leitungen 76, 77 das Edge-too-Early-Signal ETE und das Edge-too-Late-Signal ETL von der Logikschaltung 38. Die Transferfunktionslogik 75 kann fest verdrahtet sein oder bei einer bevorzugten Ausführungsform eine abgespeicherte Transferfunktion enthalten. Hierbei ist die Transferfunktionslogik 75 über Programmierleitungen 78 programmierbar. Die Transferfunktion gibt an, ob die Zeitverzögerung durch die Signalverzögerung durch die Signalverzögerungsschaltung 44 zu lange oder zu kurz ist. Bei der Transferfunktion handelt es sich um eine diskrete Funktion. Es kann zu einer Oszillation zwischen zwei Zustandswerten kommen, die neben einem Optimalwert liegen. Falls die optimale Zeitverzögerung beispielsweise 4,5 Taktzyklen beträgt, werden durch die Transferfunktion alternative Zeitverzögerungen von vier oder fünf Taktzyklen des hochfrequenten ersten Taktsignals hervorgerufen. Die Transferfunktion kann unabhängig von den übrigen Schaltkreisen auf dem Chip festgelegt bzw. programmiert werden.

Für die Transferfunktion gilt bei einer bevorzugten Ausführungsform:

Wenn $ETE_K$, $ETL_K$ den Wert von ETE, ETL bei dem n-ten Taktzyklus des hochfrequenten ersten Taktsignals $\Phi_1$ angeben, gilt:

Für jegliche Verzögerungszeit $\tau_0 \varepsilon [1,M] 4N$

$$S_k = \sum_{i=0}^{k} ETL_k - ETE_i$$

$$S_k > 1 \rightarrow \tau_{k+1} = \max(\tau_k - 1, 1)$$

$$S_k < 1 \rightarrow \tau_{k+1} = \min(\tau_k + 1, M)$$

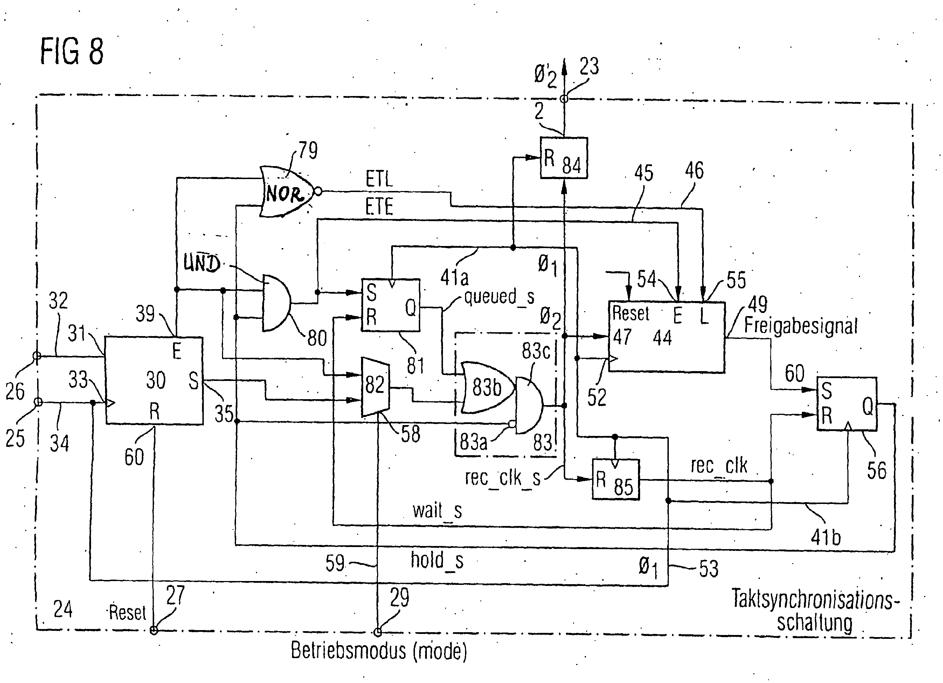

Fig. 8 zeigt eine besonders bevorzugte Ausführungsform der erfindungsgemäßen Taktsynchronisationsschaltung 24. Bei der in Fig. 8 dargestellten Ausführungsform weist die Logikschaltung 38 eine spezielle schaltungstechnische Ausgestaltung auf. Die Logikschaltung 38 umfasst bei dieser bevorzugten Ausführungsform ein NOR-Gatter 79, ein UND-Gatter 80, ein Set-Reset-Flip-Flop 81, einen Multiplexer 82, eine Logik 83, einen Zwischenspeicher-Flip-Flop 84, einen Zwischenspeicher-Flip-Flop 85 und einen Set-Reset-Flip-Flop 86. Die Taktung der Flip-Flops 81, 84, 85, 86 der Logikschaltung 38 erfolgt durch das erste Taktsignal $\Phi_1$.

Kombinatorische Gleichungen:

ETL = E $\vee$ $\overline{holds}$
ETE = E $\wedge$ hold s

rec ckl s = $\overline{holds}$ $\wedge$ (queued_s $\vee$ (mode $\wedge$ s) $\vee$ ( $\overline{mode}$ $\wedge$ E) hold_s = $\overline{GO}$ $\wedge$ (hold_r $\vee$ recclk_r) queued_s = ETE

$\wedge$ (queued_r $\wedge$ $\overline{recckl}$ r)

Zustandsgleichungen:

hold_r = hold_s
queued_r = queued_s
recclk_r = recclk_s
$\Phi_2$' = recclk_o = rec_clk_r

Bei dem ersten Set-Reset-Flip-Flop 81 besteht Priorität für den Set-Eingang, d.h. wenn sowohl S als auch R logisch 1 sind, hat der Set-Eingang den Vorrang. Bei dem Set-Reset-Flip-Flop 86 hat der Reset-Eingang den Vorrang.
Das erste Set-Reset-Flip-Flop 81 wird vorzugsweise durch ein flankengetriggertes Flip-Flop implementiert, das durch das hochfrequente Taktsignal $\Phi_1$ gemäß folgender Vorschrift arbeitet:

Q=0 when R=1 else 1 when S=1 else $Q_r$

$Q_r$ =Q, when rising edge ($\Phi_1$)

Über den Multiplexer 82 kann die Logikschaltung 38 zwischen zwei Betriebsmodi umgeschaltet werden.
Im ersten Betriebsmodus werden die Abtastwerte S als rekonstruiertes zweites Taktsignal $\Phi_2$' ausgegeben, und in dem zweiten Betriebsmodus werden die Flankendetektionswerte E als rekonstruiertes zweites Taktsignal von der Taktsynchronisationsschaltung 24 ausgegeben. Dem Multiplexer 82 ist die Logikschaltung 83 nachgeschaltet, die einen Inverter 83a, ein ODER-Gatter 83b und ein UND-Gatter 83c umfasst.
Der Abtastwert-Betriebsmodus (value sampling mode) wird aktiviert, falls die Frequenz des ersten Taktsignals etwa so groß ist wie die Taktfrequenz des zweiten Taktsignals. In diesem Falle erfasst die Abtasteinheit 30 die meisten Signalflanken. In dem theoretischen Falle, dass die beiden Taktfrequenzen identisch sind, würde die Abtasteinheit 30 keine Signalflanke detektieren und einen konstanten Wert erkennen. Mit zunehmendem Frequenzunterschied zwischen den beiden Taktfrequenzen der Taktsignale $\Phi_1$, $\Phi_2$ umfasst die Abtasteinheit mehr und mehr Signalflanken.
In dem Flankenbetriebsmodus, d.h. wenn die erkannten Flankendetektionswerte E als rekonstruiertes zweites

Taktsignal $\Phi_2$' ausgegeben werden, wird bei zu kurzer Verzögerung auf die nächste Signalflanke gewartet, bevor eine neue externe Taktsignalperiode als gestartet angesehen wird.

In dem Abtastbetriebsmodus (value sampling mode) wird auf den nächsten hohen logischen Wert gewartet, und falls die Transferfunktion eine zu kurze Signalverzögerung bewirkt, kann ein hoher logischer Wert, der zu der gleichen logisch hohen externen Taktsignalphase gehört, erkannt und als neue Phase berücksichtigt werden, wenn die erfindungsgemäße Taktsynchronisationsschaltung mittels der Signalverzögerungsschaltung 44 eine einstellbare Signalverzögerung bewirkt, um Replika des langsameren Taktsignals $\Phi_2$ im Zeitraster des schnelleren Taktsignals $\Phi_1$ zu bilden.

Die erfindungsgemäße Taktsynchronisationsschaltung weist den Vorteil auf, dass sie keine analogen Bauelemente enthält. Da sie ferner keine speziellen Bauelemente umfasst, ist die digitale Logikschaltung 38 in einfacher Weise synthetisierbar, d.h. mit Standardzellen aus einer Bauelementebibliothek beschreibbar. Der schaltungstechnische Aufbau der erfindungsgemäßen Taktsynchronisationsschaltung 24 ist gering. Mittels der erfindungsgemäßen Taktsynchronisationsschaltung kann das Interface 1 zwischen den Funktionsblöcken 2, 3 mit einer sehr hohen Datendurchsatzrate arbeiten.

Bezugszeichenliste

| | |
|---|---|
| 1 | Datenübergabe-Interfaceschaltung |
| 2 | Funktionsblock |
| 3 | Funktionsblock |
| 4 | Taktleitung |
| 5 | Taktleitung |
| 6 | Datenübergabe-Zwischenspeicher |
| 7 | Flip-Flop |
| 8 | Flip-Flop |
| 9 | Eingang |
| 10 | Leitung |
| 11 | Ausgang |
| 12 | Leitung |
| 13 | Eingang |
| 14 | Ausgang |
| 15 | Leitung |
| 16 | Eingang |
| 17 | Takteingang |
| 18 | Takteingang |
| 19 | Inverter |
| 20 | UND-Gatter |
| 21 | Leitung |
| 22 | Leitung |
| 23 | Ausgang |
| 24 | Taktsynchronisationsschaltung |
| 25 | Takteingang |
| 26 | Takteingang |
| 27 | Reset-Eingang |
| 28 | nicht belegt |
| 29 | Betriebsmodus-Steuereingang |
| 30 | Abtasteinheit |
| 31 | Taktsignaleingang |
| 32 | Leitung |
| 33 | Taktsignaleingang |
| 34 | Taktleitung |
| 35 | Ausgang |
| 36 | Ausgang |
| 37 | Leitung |
| 38 | Logikschaltung |
| 39 | Leitung |
| 40 | Takteingang |

41 Taktleitung
42 Ausgang
43 Leitung
44 Taktsignalverzögerungsschaltung
45 Leitung
46 Leitung
47 Eingang
48 Leitung
49 Ausgang
50 Leitung
51 Eingang
52 Takteingang
53 Taktleitung
54 Eingang
55 Eingang
56 Ausgang
57 Ausgang
58 Eingang
59 Leitung
60 Reset-Eingang
61 Register
62 Register
63 Taktleitung
64 Signalflankendetektor
65 Logikschaltung
66 Flip-Flop
67 Verzögerungsglieder
68 Leitungen
69 Multiplexereingänge
70 Multiplexer
71 Takteingänge
72 Taktleitung
73 Multiplexerausgang
74 Steuersignalleitung
75 Transferfunktionslogik
76 Leitung
77 Leitung
78 Programmierleitungen
79 NOR-Gatter
80 UND-Gatter
81 Set-Reset-Flip-Flop
82 Multiplexer
83 Logikschaltung
84 Flip-Flop
85 Flip-Flop
86 Set-Reset-Flip-Flop

**Patentansprüche**

**1.** Taktsynchronisationsschaltung zur Synchronisation eines 1. Taktsynchronisationsschaltung zur Synchronisation eines ersten Taktsignals ($\Phi_1$) und eines zweiten Taktsignals ($\Phi_2$) für die Datenübergabe von einem ersten Funktionsblock (2), der durch das erste Taktsignal $\Phi_1$ mit einer höheren Taktfrequenz ($f_{\Phi_1}$) getaktet wird, zu einem zweiten Funktionsblock (3), der durch das zweite Taktsignal ($\Phi_2$) mit einer niedrigeren Taktfrequenz ($f_{\Phi_2}$) getaktet wird, wobei die Taktsynchronisationsschaltung (24)

(a) eine Abtasteinheit (30) zum Abtasten des zweiten Taktsignals ($\Phi_2$) durch das erste Taktsignal ($\Phi_1$) zur Erzeugung von Abtastwerten (S) und von Flankendetektionswerten (E) des abgetasteten zweiten Taktsignals

($\Phi_2$) aufweist, und **gekennzeichnet ist durch** :

- (b) eine mit dem ersten Taktsignal ($\Phi_1$) getaktete Logikschaltung (38) die in Abhängigkeit von einem Betriebs-Modus-Steuersignal die erzeugten Abtastwerte (S) oder die erzeugten Flankendetektionswerte (E) als rekonstruiertes zweites Taktsignal ($\Phi_2$') im Zeitraster des ersten Taktsignals ($\Phi_1$) an einem Ausgang (42) der Logikschaltung (38) abgibt, wobei der Ausgang (42) der Logikschaltung (38) nach Ausgabe eines Wertes (S, E) zurückgesetzt wird bis die Logikschaltung (38) ein Freigabesignal empfängt, wobei die Logikschaltung (38) ein Edge-too-Early-Signal (ETE) generiert, wenn der erzeugte Flankendetektionswert (E) vor Empfang des Freigabesignals logisch hoch ist, und ein Edge-too-Late-Signal (ETL) generiert, wenn das Freigabesignal empfangen wird, bevor der erzeugte Flankendetektionswert (E) logisch hoch ist,

(c) und eine mit dem ersten Taktsignal ($\Phi_1$) getaktete Signalverzögerungsschaltung (44), die das von der Logikschaltung (38) abgegebene rekonstruierte zweite Taktsignal ($\Phi_2$') mit einer variablen Zeitverzögerung ($\tau$) in Abhängigkeit von dem Edge-too-Early-Signal (ETE) und dem Edge-too-Late-Signal (ETL) zur Erzeugung des Freigabesignals verzögert.

2. Taktsynchronisationsschaltung nach Anspruch 1,
**dadurchgekennzeichnet**,
dass das rekonstruierte zweite Taktsignal ($\Phi_2$') ein durch ein das erste Taktsignal ($\Phi_1$) getaktetes, erstes flankengetriggertes Flip-Flop (7) eines Datenübergabe-Zwischenspeichers (6) zum Zwischenspeichern von Daten, die von dem ersten Funktionsblock (2) ausgegeben werden, aktiviert.

3. Taktsynchronisationsschaltung nach Anspruch 2,
**dadurch gekennzeichnet, dass** dem ersten flankengetriggerten Flip-Flop (7) ein durch das zweite Taktsignal ($\Phi_2$) getaktetes zweites flankengetriggertes Flip-Flop (8) des Datenübergabe-Zwischenspeichers (6) nachgeschaltet ist, das die zwischengespeicherten Daten an den zweiten Funktionsblock (3) abgibt.

4. Taktsynchronisationsschaltung nach Anspruch 1,
**dadurch gekennzeichnet,**
**dass** die Signalverzögerungsschaltung (44) das rekonstruierte zweite Taktsignal ($\Phi_2$') mit einer Zeitverzögerung ($\tau$) verzögert, die ein Vielfaches des Taktzyklus ($T_1$) des ersten Taktsignals ($\Phi_1$) ist, wobei der Vervielfältigungsfaktor eine Zeitverzögerungstransfer-Funktion des Edge-too-Early-Signals (ETE) und des Edge-too-Late-Signals (ETL) ist.

5. Taktsynchronisationsschaltung nach Anspruch 4,
**dadurch gekennzeichnet,**
**dass** die Zeitverzögerungs-Transferfunktion in einer Transferfunktionslogik (75) der Signalverzögerungsschaltung (44) gespeichert ist.

6. Taktsynchronisationsschaltung nach Anspruch 5,
**dadurch gekennzeichnet,**
**dass** die Transferfunktionslogik (75) einen Multiplexer (70) zum Durchschalten eines der Ausgänge einer Kette (67) von Verzögerungsgliedern (67-i) als das Freigabesignal an die Logikschaltung (38) steuert.

7. Taktsynchronisationsschaltung nach Anspruch 6,
**dadurch gekennzeichnet,**
**dass** die Verzögerungsglieder (67-i) durch das erste Taktsignal ($\Phi_1$) getaktet sind.

8. Taktsynchronisationsschaltung nach Anspruch 5,
**dadurch gekennzeichnet,**
**dass** die Transferfunktionslogik (75) der Signalverzögerungsschaltung (44) programmierbar ist.

9. Taktsynchronisationsschaltung nach Anspruch 1,
**dadurch gekennzeichnet,**
**dass** die Abtasteinheit (30) aufweist:

eine aus zwei in Reihe geschalteten, flankengetriggerten Flip-Flops (61a, 61b) bestehendes erstes Register (61) zum Abtasten des zweiten Taktsignals ($\Phi_2$) mit der steigenden Signalflanke des ersten Taktsignals ($\Phi_1$),
ein aus zwei in Reihe geschalteten, flankengetriggerten Flip-Flops (62a, 62b) bestehendes zweites Register (62) zum Abtasten des zweiten Taktsignals ($\Phi_2$) mit der fallenden Signalflanke des ersten Taktsignals ($\Phi_1$),
wobei das erste Register (61) und das zweite Register (62) für den Empfang des zweiten Taktsignals ($\Phi_2$)

parallel verschaltet sind, und

einen durch das erste Taktsignal ($\Phi_1$) getakteten Signalflankendetektor (64), der in Abhängigkeit von dem abgegebenen Abtastwert des ersten Registers (61) und dem abgegebenen Abtastwert des zweiten Registers (62) und von dem im vorherigen Taktzyklus ausgegebenen Abtastwert des zweiten Registers einen Flankendetektionswert (E) an die Logikschaltung (38) abgibt.

10. Taktsynchronisationsschaltung nach Anspruch 1,
**dadurch gekennzeichnet,**
**dass** das rekonstruierte zweite Taktsignal ($\Phi_2'$) als Anzeigesignal an den zweiten Funktionsblock (3) abgegeben wird, wobei das Anzeigesignal anzeigt, dass in dem Datenübergabe-Zwischenspeicher (6) Daten zum Auslesen durch den zweiten Funktionsblock (3) zwischengespeichert sind.


### Revendications

1. Circuit de synchronisation d'horloge pour la synchronisation d'un premier signal d'horloge ($\Phi_1$) et d'un deuxième signal d'horloge ($\Phi_2$) pour le transfert de données d'un premier bloc fonctionnel (2), cadencé à une fréquence d'horloge ($f_{\Phi1}$) plus élevée par le premier signal d'horloge ($\Phi_1$), vers un deuxième bloc fonctionnel (3), cadencé à une fréquence d'horloge ($f_{\Phi2}$) plus basse par le deuxième signal d'horloge ($\Phi_2$), le circuit de synchronisation d'horloge (24) comprenant :

(a) une unité de balayage (30) pour le balayage du deuxième signal d'horloge ($\Phi_2$) par le premier signal d'horloge ($\Phi_1$) pour la génération de valeurs d'échantillonnage (S) et de valeurs de détection de flanc (E) du deuxième signal d'horloge ($\Phi_2$) balayé, et **caractérisé par** :
(b) un circuit logique (38), cadencé avec le premier signal d'horloge ($\Phi_1$), qui délivre à une sortie (42) du circuit logique (38), en fonction d'un signal de commande - mode de fonctionnement, les valeurs d'échantillonnage (S) générées ou les valeurs de détection de flanc (E) générées comme deuxième signal d'horloge reconstruit ($\Phi_2'$) dans la zone temporelle du premier signal d'horloge ($\Phi_1$), la sortie (42) du circuit logique (38) étant réinitialisée après la sortie d'une valeur (S, E) jusqu'à ce que le circuit logique (38) reçoive un signal de validation, le circuit logique (38) générant un signal Edge-too-Early (ETE) lorsque la valeur de détection de flanc (E) générée avant la réception du signal de validation est logiquement élevée et un signal Edge-too-Late (ETL) lorsque le signal de validation est reçu avant que la valeur de détection de flanc (E) générée soit logiquement élevée,
(c) et un circuit de retard de signal (44), cadencé avec le premier signal d'horloge ($\Phi_1$), qui retarde le deuxième signal d'horloge ($\Phi_2'$) reconstruit délivré par le circuit logique (38) avec un délai temporel ($\tau$) variable en fonction du signal Edge-too-Early (ETE) et du signal Edge-too-Late (ETL) pour la génération du signal de validation.

2. Circuit de synchronisation d'horloge selon la revendication 1, **caractérisé en ce que**,
le deuxième signal d'horloge ($\Phi_2'$) reconstruit active un premier flip-flop (7) d'une mémoire temporaire de transfert de données (6) pour la mémorisation temporaire de données issues du premier bloc fonctionnel (2), le flip-flop (7) étant déclenché par flanc et cadencé par le premier signal d'horloge ($\Phi_1$).

3. Circuit de synchronisation d'horloge selon la revendication 2, **caractérisé en ce que**,
un deuxième flip-flop (8) de la mémoire temporaire de transfert de données (6), déclenché par flanc, cadencé par le deuxième signal d'horloge ($\Phi_2$), est connecté en aval du premier flip-flop (7) déclenché par flanc, il délivre les données mémorisées temporairement au deuxième bloc fonctionnel (3).

4. Circuit de synchronisation d'horloge selon la revendication 1, **caractérisé en ce que**,
le circuit de retard de signal (44) retarde le deuxième signal d'horloge ($\Phi_2'$) reconstruit avec un délai temporel ($\tau$) qui est un multiple du cycle d'horloge ($T_i$) du premier signal d'horloge ($\Phi_1$), le facteur de multiplication étant une fonction de transfert de délai temporel du signal Edge-Too-Early (ETE) et du signal Edge-Too-Late (ETL).

5. Circuit de synchronisation d'horloge selon la revendication 4, **caractérisé en ce que**,
la fonction de transfert de délai temporel est mémorisée dans une logique fonctionnelle de transfert (75) du circuit de retard de signal (44).

6. Circuit de synchronisation d'horloge selon la revendication 5, **caractérisé en ce que**,
la logique fonctionnelle de transfert (75) commande un multiplexeur (70) pour commuter une des sorties d'une chaîne (67) d'éléments de retard (67-i) comme signal de validation pour le circuit logique (38).

7. Circuit de synchronisation d'horloge selon la revendication 6, **caractérisé en ce que**,
   les éléments de retard (67-i) sont cadencés par le premier signal d'horloge ($\Phi_1$).

8. Circuit de synchronisation d'horloge selon la revendication 5, **caractérisé en ce que**,
   la logique fonctionnelle de transfert (75) du circuit de retard de signal (44) est programmable.

9. Circuit de synchronisation d'horloge selon la revendication 1, **caractérisé en ce que**,
   l'unité de balayage (30) comprend :

   un premier registre (61), pour le balayage du deuxième signal d'horloge ($\Phi_2$) avec le flanc de signal montant du premier signal d'horloge ($\Phi_1$), qui comprend deux flip-flops (61a, 61b) connectés en série et déclenchés par flanc,
   un deuxième registre (62), pour le balayage du deuxième signal d'horloge ($\Phi_2$) avec le flanc de signal descendant du premier signal d'horloge ($\Phi_1$), qui
   comprend deux flip-flops (62a, 62b) connectés en série et déclenchés par flanc,
   le premier registre (61) et le deuxième registre (62) étant connectés en parallèle pour la réception du deuxième signal d'horloge ($\Phi_2$), et
   un détecteur de flanc de signaux (64), cadencé par le premier signal d'horloge ($\Phi_1$), qui délivre une valeur de détection de flanc (E) au circuit logique (38) en fonction de la valeur d'échantillonnage délivrée du premier registre (61), de la valeur d'échantillonnage délivrée du deuxième registre (62) et de la valeur d'échantillonnage du deuxième registre, sortie dans le cycle d'horloge préalable.

10. Circuit de synchronisation d'horloge selon la revendication 1, **caractérisé en ce que**,
    le deuxième signal d'horloge ($\Phi_2'$) reconstruit est délivré comme signal d'indication au deuxième bloc fonctionnel (3), le signal d'indication indiquant que des données pour l'extraction par le deuxième bloc fonctionnel (3) sont mémorisées temporairement dans la mémoire temporaire de transfert de données (6).

## Claims

1. Clock synchronization circuit for synchronizing a first clock signal ($\Phi_1$) and a second clock signal ($\Phi_2$) for data transfer from a first function block (2), which is clocked by the first clock signal ($\Phi_1$) at a relatively high clock frequency ($f_{\Phi1}$), to a second function block (3), which is clocked by the second clock signal ($\Phi_2$) at a relatively low clock frequency ($f_{\Phi2}$), where the clock synchronization circuit (24) has:

   (a) a sampling unit (30) for sampling the second clock signal ($\Phi_2$) using the first clock signal ($\Phi_1$) in order to generate samples (S) and edge detection values (E) of the sampled second clock signal ($\Phi_2$), and is **characterized by**:
   (b) a logic circuit (38) which is clocked using the first clock signal ($\Phi_1$) and which takes an operating-mode control signal as a basis for outputting the generated samples (S) or the generated edge detection values (E) as a reconstructed second clock signal ($\Phi_2'$) in the time frame of the first clock signal ($\Phi_1$) at an output (42) of the logic circuit (38),
   where the output (42) of the logic circuit (38) is reset after outputting a value (S, E) until the logic circuit (38) receives an Enable signal,
   where the logic circuit (38) generates an Edge-Too-Early signal (ETE) if the generated edge detection value (E) is at logic high before the Enable signal is received, and
   generates an Edge-Too-Late signal (ETL) if the Enable signal is received before the generated edge detection value (E) is at logic high,
   (c) and a signal delay circuit (44) which is clocked using the first clock signal ($\Phi_1$), and which delays the reconstructed second clock signal ($\Phi_2'$) sent by the logic circuit (38) with a variable time delay ($\tau$) on the basis of the Edge-Too-Early signal (ETE) and the Edge-Too-Late signal (ETL) in order to generate the Enable signal.

2. Clock synchronization circuit according to Claim 1,
   **characterized in that**
   the reconstructed second clock signal ($\Phi_2'$) activates a first edge-triggered flipflop (7), clocked by the first clock signal ($\Phi_1$), in a data transfer buffer (6) for buffering data which are output by the first function block (2).

**3.** Clock synchronization circuit according to Claim 2,
**characterized in that**
the first edge-triggered flipflop (7) has a downstream second edge-triggered flipflop (8), clocked by the second clock signal ($\Phi_2$), in the data transfer buffer (6), and this second edge-triggered flipflop sends the buffered data to the second function block (3).

**4.** Clock synchronization circuit according to Claim 1,
**characterized in that**
the signal delay circuit (44) delays the reconstructed second clock signal ($\Phi_2$') with a time delay ($\tau$) which is a multiple of the clock cycle ($T_1$) of the first clock signal ($\Phi_1$), the multiplication factor being a time-delay transfer function of the Edge-Too-Early signal (ETE) and of the Edge-Too-Late signal (ETL).

**5.** Clock synchronization circuit according to Claim 4,
**characterized in that**
the time-delay transfer function is stored in a transfer-function logic unit (75) in the signal delay circuit (44).

**6.** Clock synchronizaticn circuit according to Claim 5,
**characterized in that**
the transfer-function logic unit (75) controls a multiplexer (70) for connecting one of the outputs of a chain (67) of delay elements (67-i) to the logic circuit (38) as the Enable signal.

**7.** Clock synchronization circuit according to Claim 6,
**characterized in that**
the delay elements (67-i) are clocked by the first clock signal ($\Phi_1$).

**8.** Clock synchronization circuit according to Claim 5,
**characterized in that**
the transfer-function logic unit (75) in the signal delay circuit (44) is programmable.

**9.** Clock synchronization circuit according to Claim 1,
**characterized in that**
the sampling unit (30) has:

> a first register (61), comprising two series-connected, edge-triggered flipflops (61a, 61b), for sampling the second clock signal ($\Phi_2$) with the rising signal edge of the first clock signal ($\Phi_1$),
> a second register (62), comprising two series-connected, edge-triggered flipflops (62a, 62b), for sampling the second clock signal ($\Phi_2$) with the falling signal edge of the first clock signal ($\Phi_1$),
> where the first register (61) and the second register (62) are connected in parallel in order to receive the second clock signal ($\Phi_2$), and
> a signal edge detector (64) which is clocked by the first clock signal ($\Phi_1$) and which takes the sent sample from the first register (61) and the sent sample from the second register (62) and the sample which was output from the second register in the preceding clock cycle as a basis for sending an edge detection value (E) to the logic circuit (38).

**10.** Clock synchronization circuit according to Claim 1,
**characterized in that**
the reconstructed second clock signal ($\Phi_2$') is sent to the second function block (3) as an indicator signal, the indicator signal indicating that the data transfer buffer (6) has data buffered in it which are to be read by the second function block (3).

# FIG 1
## Stand der Technik

EP 1 565 803 B1

# FIG 2
## Stand der Technik

FIG 3

Datenübergabe
zwischenspeicher

Anzeigesignal

Betriebsmodus
Steuersignal

Reset

WE

EP 1 565 803 B1

FIG 4

# FIG 5

○ = Sampler / Abtastwerte

# FIG 6A

Reset · 60

61 — 61b, 61a — S'

62 — 62b, 62a

S · 35

E · 36 — 64

S' / S · 65

L · 66

Signalflankendetektor

Ø₁ · 33

63

Ø₂ · 31

Abtasteinheit 30

# FIG 6B

Wahrheitstabelle

| $S'_t$ | $S_t$ | $S_{t-1}$ | $E_t$ |
|---|---|---|---|
| 0 | 0 | 0 | 0 |
| 0 | 0 | 1 | 0 |
| 0 | 1 | 0 | 1 |
| 0 | 1 | 1 | 1 |
| 1 | 0 | 0 | 1 |
| 1 | 0 | 1 | 0 |
| 1 | 1 | 0 | 1 |
| 1 | 1 | 1 | 0 |

# FIG 7

EP 1 565 803 B1

FIG 8